# FASCICULE DE BREVET EUROPEEN

(11) **EP 3 180 233 B1**
(45) Date de publication et mention de la délivrance du brevet: **03.10.2018**
(21) Numéro de dépôt: 15748225.8
(22) Date de dépôt: 05.08.2015
(51) Int. Cl.: B62D 25/14, B62D 29/04

(54) **ENSEMBLE COMPORTANT UNE TRAVERSE DE PLANCHE DE BORD EQUIPEE D'UN SUPPORT POUR LA FIXER AU TABLIER D'UN VEHICULE AUTOMOBILE**
ANORDNUNG MIT EINEM ARMATURENBRETTQUERTRÄGER MIT EINEM HALTER ZUM ANBRINGEN DIESES QUERTRÄGERS AM ARMATURENBRETT EINES KRAFTFAHRZEUGS
ASSEMBLY COMPRISING AN INSTRUMENT PANEL CROSSMEMBER PROVIDED WITH A SUPPORT FOR ATTACHING SAID CROSSMEMBER TO THE DASHBOARD OF A MOTOR VEHICLE

(30) Priorité: 14.08.2014 FR 1457804
(43) Date de publication de la demande: 21.06.2017
(73) Titulaire: PSA Automobiles SA, 78300 Poissy (FR); Rehau SA, 57340 Morhange (FR)
(72) Inventeur: APPASAMY, Jean Michel, F-78760 Jouars Pontchartrain (FR); PENNERATH, Eddy, F-57450 Henriville (FR)
(74) Mandataire: Fosse, Danièle
(86) Numéro de dépôt international: PCT/EP2015/068068
(87) Numéro de publication internationale: WO 2016/023803

(56) Documents cités:
- WO-A1-2013/164956
- FR-A1- 2 991 655
- US-A1- 2011 227 369

## Description

La présente invention concerne un ensemble comportant une traverse de planche de bord pour véhicule automobile et un support pour fixer la colonne de direction à cette traverse et fixer celle-ci au tablier du véhicule.

Le document US 2011/0227369 A1 divulgue un ensemble selon le préambule de la revendication 1.

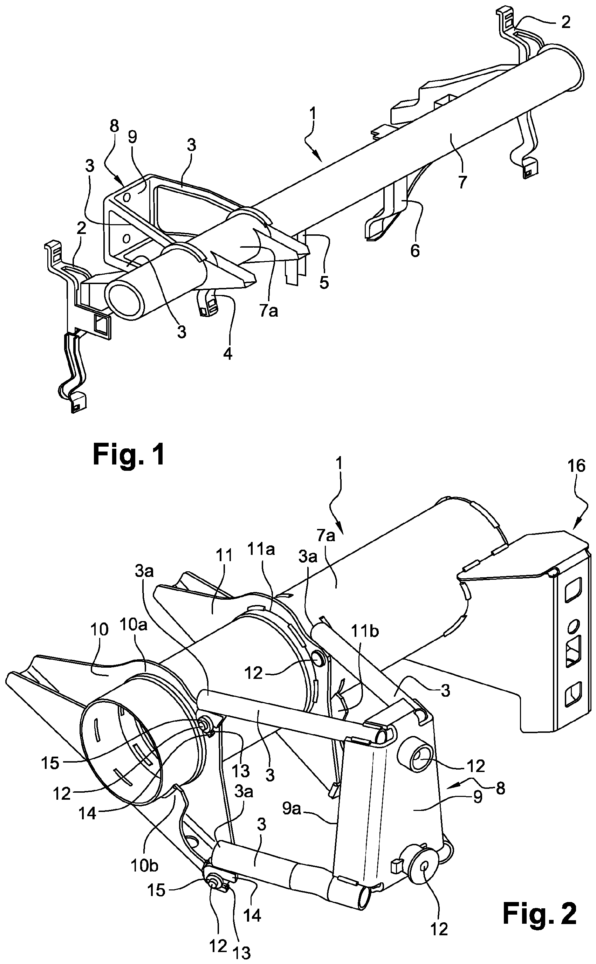

La figure 1 représente une traverse 1 de planche de bord pour véhicule automobile équipée de divers bras de fixation, tels que les bras 2, 3, 4, 5, 6 permettant de fixer la traverse 1 à la caisse du véhicule ou de fixer des accessoires à cette traverse.

Dans le but d'alléger cette traverse 1, celle-ci comprend dans la zone située à la droite de la figure 1, un tube 7 en matière plastique composite, telle que du polypropylène chargé de fibres.

Lorsque la traverse 1 est en position dans un véhicule, le tube 7 en matière composite s'étend devant le passager avant.

La partie 7a de la traverse 1 qui est située devant le conducteur est un tube en acier qui est relié au tube 7 en matière composite.

La traverse 1 comporte en outre à chacune de ses deux extrémités opposées, un support latéral 2 permettant de fixer la traverse 1 à la caisse du véhicule.

La partie 7a en acier de la traverse 1 comporte un support 8 qui comprend une platine 9 qui est reliée à la partie 7a de la traverse 1 par plusieurs bras 3.

Ces bras 3 s'étendent sensiblement dans la direction X de la longueur du véhicule lorsque l'ensemble selon l'invention est monté dans le véhicule.

La platine 9 est destinée à être fixée au tablier du véhicule.

L'extrémité des bras 3 opposée à la platine 9 est fixée à la partie 7a en acier de la traverse.

L'ensemble du support 8 supporte la colonne de direction.

Cet ensemble doit supporter la traverse de façon rigide pour que la colonne de direction ne vibre pas lors du roulage du véhicule.

Par ailleurs, en cas de choc frontal du véhicule, les bras 3 du support 8 ne doivent pas transmettre au tube de la traverse un effort supérieur à une valeur prédéterminée par exemple égale à 700 daN.

Cette contrainte est a priori incompatible avec l'exigence ci-dessus, de rigidité des bras du support 8 pour éviter les vibrations.

Le but de la présente invention est précisément de satisfaire à ces exigences.

Ce but est atteint, selon l'invention, grâce à un ensemble comportant une traverse de planche de bord pour véhicule automobile, cette traverse comportant un tube qui comporte un support qui comprend plusieurs bras reliés à une partie dudit tube, ces bras s'étendant sensiblement dans la direction longitudinale du véhicule, lorsque l'ensemble est monté dans ce véhicule, caractérisé en ce que ces bras sont reliés à ladite partie du tube par des moyens de liaison comprenant deux éléments serrés l'un contre l'autre et pouvant se libérer l'un de l'autre en cas de choc frontal du véhicule.

Ainsi, ces moyens de liaison permettent en cas de choc frontal d'éviter que les bras puissent transmettre des efforts supérieurs à une valeur prédéterminée.

De plus, ces moyens de liaison permettent aux bras d'être très rigides pour éviter les vibrations.

Pour avoir une rigidité optimale, les bras présentent de préférence une section transversale tubulaire.

Dans une version préférée de l'invention, ladite partie du tube est en acier, le reste du tube étant en matière composite.

Selon l'invention, l'extrémité de chacun des bras est reliée par lesdits moyens de liaison à une partie entourant au moins partiellement ladite partie du tube en acier.

Selon l'invention, lesdits moyens de liaison comprennent une vis engagée dans un trou réalisé dans la partie entourant au moins partiellement ladite partie du tube et dans une encoche en forme de U réalisée dans une pièce fixée à l'extrémité de chaque bras, le U formé par ladite encoche étant ouvert dans une direction telle que cette encoche puisse se libérer de la vis lorsque le bras est sollicité par une force prédéterminée dirigée vers ladite partie du tube.

Selon d'autres particularités avantageuses de l'invention :
- sur ladite vis est vissée un écrou, le couple de serrage de cet écrou étant suffisant pour que l'encoche ne puisse pas se libérer de la vis, tant que ladite force n'a pas atteint ladite force prédéterminée ;
- sur chacune des vis est vissée un écrou prenant appui sur une rondelle conique et élastique du type Belleville pour serrer la pièce contre ladite partie avec une force prédéterminée ;
- des moyens sont prévus pour éviter que l'extrémité des bras bute contre la partie du tube ou ladite partie lorsque ladite extrémité des bras est libérée par rapport à ladite partie en cas de choc frontal ;
- les deux bras inférieurs comportent chacun une extrémité biseautée et ladite partie comporte des rampes sur lesquelles peut glisser ladite extrémité biseautée lorsque celle-ci a été libérée de la partie lors d'un choc frontal ;
- chacun des deux bras inférieurs comporte un pli pour amorcer le pliage vers l'extérieur de chacun desdits bras en cas de choc frontal.

Selon un autre aspect, l'invention concerne également un véhicule automobile équipé d'un ensemble selon l'invention.

D'autres particularités et avantages de l'invention apparaîtront encore tout au long de la description ci-après.

Aux dessins annexés, donnés à titre d'exemples, non limitatifs :
- la figure 2 est une vue en perspective partielle d'un ensemble traverse et support selon l'invention,
- la figure 3 est une autre vue en perspective partielle de l'ensemble représenté sur la figure 2,
- la figure 4 est une vue en perspective partielle d'une autre réalisation d'un ensemble traverse et support selon l'invention,
- la figure 5 est une autre vue en perspective de l'ensemble représenté sur la figure 4,
- la figure 6 est une vue agrandie du détail A de la figure 5,
- la figure 7 est une vue montrant un écrou serré sur une rondelle de Belleville.

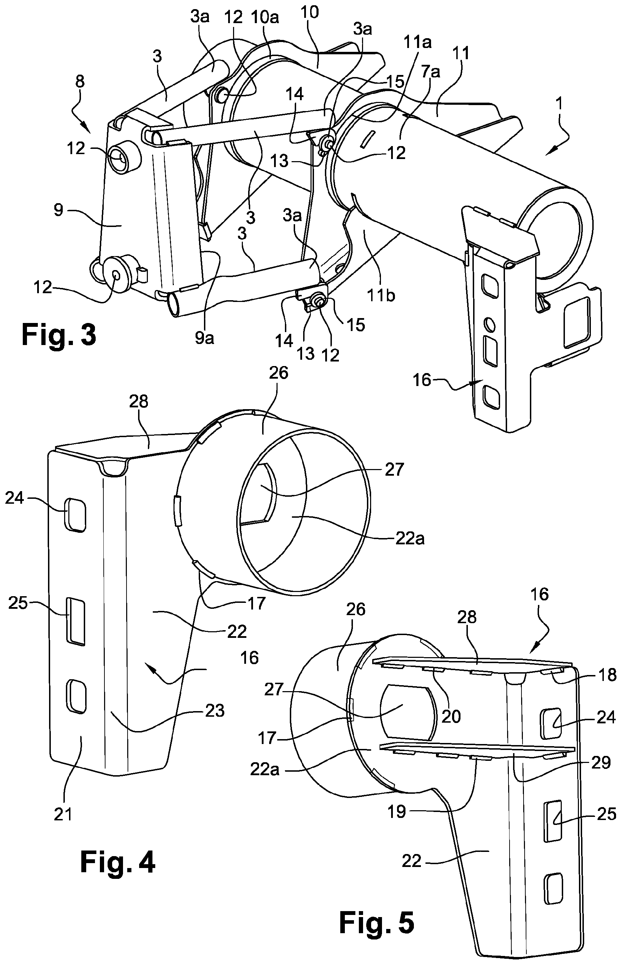

Les figures 2 et 3 représentent un ensemble comportant une traverse 1 de planche de bord pour véhicule automobile.

Cette traverse 1 comporte un tube dont une partie est en matière plastique composite et une autre partie 7a est en acier.

La partie en matière plastique composite de la traverse 1 n'est pas représentée sur les figures 2 et 3.

La partie 7a en acier de la traverse 1 comporte un support 8 qui comprend plusieurs bras 3 reliés à la partie en acier 7a du tube.

Ces bras 3 s'étendent sensiblement dans la direction longitudinale du véhicule lorsque l'ensemble de la traverse 1 est monté dans ce véhicule.

L'extrémité des bras 3 opposée à la traverse 1 est reliée à une platine 9 qui est destinée à être fixée au tablier du véhicule.

A cet effet, la platine 9 comporte deux trous de fixation 12a qui, lorsque l'ensemble est fixé dans un véhicule, sont alignés dans la direction verticale du véhicule.

L'ensemble du support 8 constitué par les bras 3 et la platine 9 est rigide.

La rigidité des bras 3 est obtenue notamment grâce à leur structure tubulaire.

La rigidité de la platine 9 est obtenue grâce à son pourtour constitué de bords tombés 9a.

Conformément à l'invention, les bras 3 sont reliés à la partie 7a du tube en acier par des moyens de liaison permettant à ces bras 3 de se libérer de la partie 7a du tube en cas de choc frontal du véhicule.

A cet effet, l'extrémité 3a de chacun des bras 3 est reliée par les moyens de liaison précités à une partie 10, 11 entourant au moins partiellement la partie 7a du tube en acier.

Dans l'exemple montré sur les figures 2 et 3, les moyens de liaison ci-dessus comprennent une vis 12 engagée dans un trou réalisé dans la partie 10, 11 entourant au moins partiellement la partie 7a du tube et dans une encoche 13 en forme de U réalisée dans une pièce 14 fixée à l'extrémité 3a de chaque bras 3.

Le U formé par l'encoche 13 est ouvert dans une direction opposée à la partie 7a du tube.

Ainsi cette encoche 13 peut se libérer de la vis 12 lorsque le bras 3 est sollicité par une force prédéterminée dirigée vers la partie 7a du tube.

La vis 12 est vissée sur un écrou 15 pour serrer la pièce 14 comportant l'encoche 13 contre la partie 10, 11 entourant au moins partiellement la partie 7a du tube.

Par ailleurs, la vis 12 est vissée sur l'écrou 15 avec un couple de serrage suffisant pour que l'encoche 13 ne puisse pas se libérer de la vis 12 tant que la force qui sollicite le bras 3 n'atteint pas la force prédéterminée.

Dans l'exemple représenté sur les figures 2 et 3, les parties 10, 11 fixées sur la partie 7a en acier de la traverse sont constituées par une tôle pliée pour former une section en forme de U.

L'une des ailes du U comporte un évidement circulaire 10a, 11a dans lequel est engagée la partie en acier 7a du tube.

L'autre aile du U comporte un évidement 10b, 11b en forme d'arc de cercle qui est en contact avec la partie 7a du tube.

Les évidements circulaires 10a, 11a et les évidements en arc de cercle 10b, 11b sont reliés à la partie 7a en acier du tube par des soudures.

Les figures 4 et 5 représentent un autre mode de réalisation d'un ensemble traverse et support, selon l'invention.

Ce mode de réalisation comporte des parties inchangées par rapport à la réalisation représentée sur les figures 2 et 3.

Ces parties inchangées sont désignées par les mêmes références.

Une première modification se situe au niveau des liaisons entre les deux bras supérieurs 3 et les deux parties 10, 11 qui entourent la partie 7a du tube de la traverse.

L'encoche 13 est réalisée non pas dans la pièce 14 qui est fixée à chacun des deux bras supérieurs 3, mais dans les deux parties 10, 11.

De plus, chacune des deux encoches 13 est ouverte dans une direction opposée à la platine 9.

En outre, chacune des deux encoches 13 est située dans une position telle que lorsque les bras 3 sont poussés vers la traverse par une force supérieure à un seuil prédéterminé, la pièce 14 ne risque pas de buter contre la traverse ou l'une des parties 10, 11.

La deuxième modification se situe dans la zone de l'extrémité des bras inférieurs 3.

Entre la pièce 14 portée par l'extrémité de chaque bras inférieur 3 et les deux parois 10a, 10b et 11a, 11b qui constituent les parties 10, 11 sont fixées deux rampes de guidage 31, 32.

Ces deux rampes 31, 32 dévient la trajectoire de l'extrémité des deux bras inférieurs 3, lorsque la pièce 14 portée par chaque bras se libère de la vis 12 sous l'effet d'une force supérieure à un seuil prédéterminé.

Pour compléter l'effet des deux rampes 31, 32, l'extrémité des deux bras inférieurs comporte une face biseautée 3a, comme montré sur la figure 6.

Les deux rampes 31, 32 permettent ainsi d'éviter que l'extrémité des bras 3 ci-dessus bute contre les parois 10a, 10b et 11a, 11b.

Une troisième modification réside dans le fait que les écrous 15 vissés sur les vis 12 qui sont engagées dans les encoches 13 des pièces 14 sont serrés contre des rondelles 15a de type Belleville en appui contre les pièces 14, comme montré sur la figure 7.

La raideur de ces rondelles 15a détermine la force avec laquelle elles s'appuient contre les pièces 14.

On peut ainsi régler le seuil de la force qui libère les bras 3 des parties 10 et 11.

Comme montré par la figure 7, la rondelle Belleville 15a prend appui sur un épaulement 12b de la vis 12, ce qui permet de limiter le serrage de la rondelle.

Ainsi, chacune des pièces 14 est serrée contre une partie 10, 11 par une force prédéterminée qui dépend uniquement des caractéristiques de la rondelle 15a.

On va maintenant décrire le fonctionnement de l'ensemble selon l'invention, représenté sur les figures 4 à 7.

Lors du roulage du véhicule équipé d'un tel ensemble, ce dernier ne transmet à la colonne de direction aucune vibration ressentie comme gênante par le conducteur.

Ceci est dû à la rigidité de l'ensemble, en particulier celles des bras 3 et de la fixation de ceux-ci à la traverse.

En cas de choc frontal, du fait de leur rigidité, les bras 3 ne peuvent pas plier pour absorber l'énergie du choc, mais leur fixation peut se libérer des parties 10, 11 qui sont fixées au tube de la traverse.

En effet, lorsque les efforts dus au choc frontal dépassent un seuil prédéterminé, l'encoche 13 de la partie 14 de l'extrémité de chaque bras 3 peut se libérer de la vis 12 en glissant par rapport à la rondelle 15a qui est serrée sur la partie 14.

Ce système est très fiable, car l'écrou 15 vissé sur la rondelle engendre sur la partie 14 un frottement prédéterminé que l'on peut régler facilement en choisissant judicieusement la rondelle Belleville appropriée.

Par ailleurs, différentes mesures ont été prises pour éviter que l'extrémité des bras, après leur libération des parties 14, bute contre un obstacle, ce qui anéantirait les effets souhaités, à savoir limiter les efforts transmis à la traverse.

Ces mesures sont constituées par les plis 3b réalisés sur les bras 3, l'extrémité biseautée 3a de ceux-ci et les rampes de guidage 31, 32.

Ces mesures ont été suffisamment décrites plus haut, de sorte qu'il est inutile de revenir sur celles-ci.

Bien entendu, l'invention n'est pas limitée aux exemples qui ont été décrits.

Ainsi, le tube de la traverse peut être entièrement en acier ou entièrement en matière composite.

En outre, la liaison entre les bras 3 et le tube peut être réalisée par d'autres moyens que des vis et des écrous, tels que des rivets épaulés.

## Revendications

1. Ensemble comportant une traverse (1) de planche de bord pour véhicule automobile, cette traverse (1) comportant un tube qui comporte un support (8) qui comprend plusieurs bras (3) reliés à une partie (7a) dudit tube, ces bras (3) s'étendant sensiblement dans la direction longitudinale du véhicule, lorsque l'ensemble est monté dans ce véhicule, **caractérisé en ce que** ces bras (3) sont reliés à ladite partie (7a) du tube par des moyens de liaison comprenant deux éléments serrés l'un contre l'autre et pouvant se libérer l'un de l'autre en cas de choc frontal du véhicule, l'extrémité (3a) de chacun des bras (3) étant reliée par lesdits moyens de liaison à une partie (10, 11) entourant au moins partiellement ladite partie (7a) du tube et lesdits moyens de liaison comprenant une vis (12) engagée dans un trou réalisé dans la partie (10, 11) entourant au moins partiellement ladite partie (7a) du tube et dans une encoche (13) en forme de U réalisée dans une pièce (14) fixée à l'extrémité (3a) de chaque bras (3), le U formé par ladite encoche (13) étant ouvert dans une direction telle que cette encoche (13) puisse se libérer de la vis (12) lorsque le bras (3) est sollicité par une force prédéterminée dirigée vers ladite partie (7a) du tube.

2. Ensemble selon la revendication 1, **caractérisé en ce que** la partie (7a) du tube est en acier, le reste du tube étant en matière composite.

3. Ensemble selon l'une des revendications 1 ou 2, **caractérisé en ce que** sur ladite vis (12) est vissée un écrou (15), le couple de serrage de cet écrou (15) étant suffisant pour que l'encoche (13) ne puisse pas se libérer de la vis (12), tant que ladite force n'a pas atteint ladite force prédéterminée.

4. Ensemble selon l'une des revendications 1 à 3, **caractérisé en ce que** sur chacune des vis (12) est vissée un écrou (15) prenant appui sur une rondelle conique et élastique du type Belleville pour serrer la pièce (14) contre ladite partie (10, 11) avec une force prédéterminée.

5. Ensemble selon la revendication 1, **caractérisé en ce que** des moyens sont prévus pour éviter que l'extrémité des bras (3) bute contre la partie (7a) du tube ou ladite partie (10, 11) lorsque ladite extrémité des bras (3) est libérée par rapport à ladite partie (10, 11) en cas de choc frontal.

6. Ensemble selon la revendication 5, **caractérisé en ce que** ce les deux bras inférieurs (3) comportent chacun une extrémité biseautée (3a) et ladite partie (10, 11) comporte des rampes (31, 32) sur lesquelles peut glisser ladite extrémité biseautée (3a) lorsque celle-ci a été libérée de la partie (10, 11) lors d'un choc frontal.

7. Ensemble selon la revendication 6, **caractérisé en ce que** chacun des deux bras inférieurs (3) comporte un pli (3b) pour amorcer le pliage vers l'extérieur de chacun desdits bras (3) en cas de choc frontal.

8. Véhicule automobile équipé d'un ensemble selon l'une des revendications 1 à 7.

## Patentansprüche

1. Anordnung, die einen Armaturenbrettquerträger (1) für Kraftfahrzeug umfasst, wobei dieser Querträger (1) ein Rohr umfasst, das einen Halter (8) umfasst, der mehrere Schenkel (3) umfasst, die mit einem Teil (7a) des Rohrs verbunden sind, wobei sich diese Schenkel (3) im Wesentlichen in die Längsrichtung des Fahrzeugs erstrecken, wenn die Anordnung in dem Fahrzeug montiert ist, **dadurch gekennzeichnet, dass** diese Schenkel (3) mit dem Teil (7a) des Rohrs durch Verbindungsmittel verbunden sind, die zwei Elemente umfassen, die aneinander gedrückt sind und sich voneinander im Fall eines Frontalaufpralls des Fahrzeugs befreien können, wobei das Ende (3a) jedes der Schenkel (3) durch die Verbindungsmittel mit einem Teil (10, 11), der den Teil (7a) des Rohrs mindestens teilweise umgibt, verbunden ist, und wobei die Verbindungsmittel eine Schraube (12) umfassen, die in eine Bohrung, die in dem Teil (10, 11), der den Teil (7a) des Rohrs mindestens teilweise umgibt, hergestellt ist, und in einer Kerbe (13) in U-Form, die in einem Teil (14), das an dem Ende (3a) jedes Schenkels (3) hergestellt ist, eingefügt ist, wobei das U, das von der Kerbe (13) gebildet wird, in eine Richtung derart offen ist, dass sich diese Kerbe (13) von der Schraube (12) befreien kann, wenn der Schenkel (3) durch eine vorbestimmte Kraft, die zu dem Teil (7a) des Rohrs gerichtet ist, befreien kann.

2. Anordnung nach Anspruch 1, **dadurch gekennzeichnet, dass** der Teil (7a) des Rohrs aus Stahl besteht, wobei der Rest des Rohrs aus Verbundmaterial besteht.

3. Anordnung nach einem der Ansprüche 1 oder 2, **dadurch gekennzeichnet, dass** eine Mutter (15) auf die Schraube (12) geschraubt ist, wobei das Anziehdrehmoment dieser Mutter (15) ausreicht, damit sich die Kerbe (13) nicht von der Schraube (12) befreien kann, solange die Kraft nicht die vorbestimmte Kraft erreicht hat.

4. Anordnung nach einem der Ansprüche 1 bis 3, **dadurch gekennzeichnet, dass** auf jede der Schrauben (12) eine Mutter (15) geschraubt ist, die auf einer kegelförmigen und elastischen Unterlegscheibe vom Typ Belleville aufliegt, um das Teil (14) gegen den Teil (10, 11) mit einer vorbestimmten Kraft anzudrücken.

5. Anordnung nach Anspruch 1, **dadurch gekennzeichnet, dass** Mittel vorgesehen sind, um zu vermeiden, dass das Ende der Schenkel (3) gegen den Teil (7a) des Rohrs oder den Teil (10, 11) anschlägt, wenn das Ende der Schenkel (3) in Bezug auf den Teil (10, 11) bei einem Frontalaufprall freigegeben wird.

6. Anordnung nach Anspruch 5, **dadurch gekennzeichnet, dass** die zwei unteren Schenkel (3) jeweils ein abgeschrägtes Ende (3a) umfassen, und der Teil (10, 11) Rampen (31, 32) umfasst, auf welchen das abgeschrägte Ende (3a) gleiten kann, wenn es aus dem Teil (10, 11) bei einem Frontalaufprall freigegeben wurde.

7. Anordnung nach Anspruch 6, **dadurch gekennzeichnet, dass** jeder der zwei unteren Schenkel (3) eine Falte (3b) umfasst, um das Falten jedes der Schenkel (3) bei einem Frontalaufprall einzuleiten.

8. Kraftfahrzeug, das mit einer Anordnung nach einem der Ansprüche 1 bis 7 ausgestattet ist.

## Claims

1. An assembly comprising an instrument panel crossmember (1) for a motor vehicle, this crossmember (1) comprising a tube which comprises a support (8) which includes a plurality of arms (3) connected to a portion (7a) of said tube, these arms (3) extending substantially in the longitudinal direction of the vehicle, when the assembly is mounted in this vehicle, **characterized in that** these arms (3) are connected to said portion (7a) of the tube by connection means including two elements that are clamped one against the other and being able to be released from one another in the event of a frontal impact of the vehicle, the end (3a) of each of the arms (3) being connected by said connection means to a portion (10, 11) at least partially surrounding said portion (7a) of the tube, and said connection means including a screw (12) engaged in a hole formed in the portion (10, 11) at least partially surrounding said portion (7a) of the tube and in a U-shaped notch (13) formed in a part (14) fixed to the end (3a) of each arm (3), the U formed by said notch (13) being open in a direction such that this notch (13) can release itself from the screw (12) when the arm (3) is loaded by a predetermined force directed towards said portion (7a) of the tube.

2. The assembly according to Claim 1, **characterized in that** the portion (7a) of the tube is made of steel, the remainder of the tube being made of composite material.

3. The assembly according to one of Claims 1 or 2, **characterized in that** a nut (15) is screwed on said screw (12), the tightening torque of this nut (15) being sufficient so that the notch (13) can not release itself from the screw (12) as long as said force has not reached said predetermined force.

4. The assembly according to one of Claims 1 to 3, **characterized in that** on each of the screws (12) a nut (15) is screwed, bearing on a conical and elastic washer of the Belleville type for tightening the part (14) against said portion (10, 11) with a predetermined force.

5. The assembly according to Claim 1, **characterized in that** means are provided to prevent the end of the arms (3) from abutting against the portion (7a) of the tube or said portion (10, 11) when said end of the arms (3) is released with respect to said portion (10, 11) in the event of a frontal impact.

6. The assembly according to Claim 5, **characterized in that** the two lower arms (3) each comprise a bevelled end (3a) and said portion (10, 11) comprises ramps (31, 32) on which said bevelled end (3a) can slide when the latter has been released from the portion (10, 11) during a frontal impact.

7. The assembly according to Claim 6, **characterized in that** each of the two lower arms (3) comprises a bend (3b) for initiating the bending towards the exterior of each of said arms (3) in the event of a frontal impact.

8. A motor vehicle equipped with an assembly according to one of Claims 1 to 7.
